# EUROPEAN PATENT APPLICATION

(11) **EP 4 760 558 A1**
(43) Date of publication of application: **17.06.2026**
(21) Application number: 25220894.7
(22) Date of filing: 04.12.2025
(51) Int. Cl.: G06F 21/44, H04L 9/40, G06F 11/22, G06F 11/362

(54) **SECURE DEBUGGING FUNCTIONALITY IN THE DATACENTER**

(30) Priority: 12.12.2024 US 202418979144
(71) Applicant: Microsoft Technology Licensing, LLC, Redmond, WA 98052 (US)
(72) Inventor: WESNESKI, CHRISTOPHER MICHAEL, Redmond, 98052 (US); PUTTURAYA, SANDESH JAYARAMA, Redmond, 98052 (US); DUTHIRARU, SURESH SRIRAMULU, Redmond, 98052 (US)
(74) Representative: CMS Cameron McKenna Nabarro Olswang LLP

(57) **Abstract**

Improved techniques for remote access to a server's sensitive hardware debugging resources include a two-stage authentication of a remote debugger. The server's management controller may authenticate certificate data from the remote debugger and in response may bridge communications between the remote debugger and a debug port of the server's processor module. A security processor in the processor module may further authenticate the remote debugger by also authenticating certificate data provided by the remote debugger. After determining the remote debugger to be trustworthy, the security processor may enable the remote debugger to access hardware debugging resources within the hardware processor module.

## Description

### BACKGROUND

Remote debugging of a computer device allows system management and debugging of the computer device without physical access to the computer. A network connection between the remote debugger and the computer device allows the remote debugger to inspect and control debugging resources of the computer device such as control registers and memory caches. In addition to identification and repair of hardware and software flaws in the computer device, access to debugging resources can facilitate deployment, configuration, and general system management of a computer device.

Computer server devices often include hardware debugging resources that are not accessible to software running on a processing core in the computer server. For example, a hardware debugging resource may allow for installing or upgrading firmware on the computer server, performing hardware diagnostics, and enabling and disabling discrete hardware devices within the server. For example, access to a server's hardware debugging resources may allow a debugger to diagnose a particular storage device and determine that the storage device is defective and then cause the server to fail-over to a pre-existing spare storage device in the server. Access to such hardware debugging resources typically require direct physical access to a physical debug port of a computer device, for example using a MIPI Alliance and/or Joint Test Action Group (JTAG) protocol over the physical debug port. Software applications and even an operating system running on one or more of the processing cores may have limited access or no access at all to some hardware debugging resources.

### SUMMARY

Hardware debugging resources allow inspection and control of sensitive hardware and data stored on a server computer, and therefore access to these resources must be controlled to ensure security and privacy of software and data on the server. As a result, hardware debugging resources are generally not accessible without direct physical access to a physical debug port in a computer server. Improved server hardware management and debugging techniques are described herein. These techniques allow for secured remote access to hardware debugging resources and hence enable secure remote deployment, configuration, verification, debugging, repair, and other types of maintenance of computer server hardware. Security of remote access may be rooted in authentication by a hardware security processor embedded in a hardware processor module, and remote access may be further secured by requiring additional authentication by a management controller.

Improved techniques for remote access to sensitive hardware debugging resources may include a two-stage secure authentication of a remote debugger. The server's management controller may be connected to a remote debugger via a computer network (such as the internet), and the management controller may also be connected to a debug port of the server's hardware processor module. The management controller may bridge communications between the remote debugger and a debug port after determining the remote debugger to be trustworthy by authenticating certificate data received from the remote debugger. After communications from the debugger is bridged to the debug port of a hardware processor module, a security processor in the hardware processor module may further authenticate the remote debugger by also authenticating certificate data provided by the remote debugger. After determining that the remote debugger is trustworthy, the security processor may enable the remote debugger to access sensitive hardware debugging resources within the hardware processor module, such as by enabling the hardware processor module's debug port.

Features and technical benefits other than those explicitly described above will be apparent from a reading of the following Detailed Description and a review of the associated drawings. This Summary is provided to introduce a selection of concepts in a simplified form that are further described below in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items. References made to individual items of a plurality of items can use a reference number with a letter of a sequence of letters to refer to each individual item. Generic references to the items may use the specific reference number without the sequence of letters.
FIG. 1 depicts an example system for remote debugging.
FIGS. 2A-2C illustrate example secure remote debugging techniques using the system of FIG. 1.
FIG. 3 depicts an example method for remote debugging.
FIG. 4 depicts a block diagram of a computing-based device that may be included in an example of any of the above systems.

### DETAILED DESCRIPTION

Hardware debugging resources allow inspection and control of sensitive hardware and data stored on a server computer, and therefore access to these resources must be controlled to ensure security and privacy of software and data on the server. As a result, hardware debugging resources are generally not accessible without direct physical access to a physical debug port in a computer server. Debugging and maintenance of server hardware typically requires a human to physically enter a server facility to find and physically access a server's debugging port to access sensitive debugging resources. Such physical access by a human is slow and expensive compared to remote access.

Improved server hardware management and debugging techniques are described herein. These techniques allow for secured remote access to a server's hardware debugging resources and hence enable secure remote deployment, configuration, verification, debugging, repair, and other types of maintenance of computer server hardware. These techniques enable improved security of hardware debugging resources and therefore improved security and privacy for the server's physical hardware as well as the software and data running or stored on the server. Furthermore, newly remote access enabled by improved security enables faster and reduced cost debugging, repair, and other types of server maintenance for computer server hardware.

Security of remote access to sensitive hardware debugging resources may be rooted in authentication by a hardware security processor embedded in a hardware processor module, and remote access may be further secured by requiring additional authentication by a management controller. A typical computer server, such as a blade in server farm, may include baseboard management controller (BMC) physically attached to the debug port of a hardware processor module. The hardware processor module may be a single package electronic device such as system-on-a-chip. In addition to several processor cores and memory caches for running compute workloads from the server's clients, the hardware processor module may also include a dedicated hardware security processor and some hardware debugging resources.

Improved techniques for remote access to hardware debugging resources may include two-stage authentication of a remote debugger. First, access to a debug port is gated by a server's management controller. A remote debugger may connect to the management controller via the network, and the management controller may bridge communications between the remote debugger and the server's hardware processor module after determining the remote debugger to be trustworthy by authenticating first certificate data received from the remote debugger. Second, access to debugging resources is gated by a security processor. After communications from the debugger is bridged to the debug port of a hardware processor module, a security processor in the server's hardware processor module may further authenticate the remote debugger by authenticating second certificate data provided by the remote debugger. After the security processor also determines the remote debugger is trustworthy, the security processor may enable the remote debugger to access hardware debugging resources within the hardware processor module. Debugging resources may include, for example, debug traces and debug control registers, and access to debugging resources may include the ability to read data from or write data to debug resources and/or control of debugging resources.

In one aspect, a first secure encrypted communication channel may be established between the management controller and the remote debugger, a second secure encrypted communication channel may be established between the remote debugger and a security processor in the hardware processor module, and a third secure encrypted channel may be established between the remote debugger and the hardware processor module's debugging resources. In another aspect, the security processor may limit which debugging resources the remote debugger is allowed to access based, for example, on the second certificate data provided by the debugger. The security processor may also only allow access to debugging resources after changing a state of the hardware processor module, for example by clearing a cache in the hardware processor module that may contain sensitive data. Clearing a cache or memory state may help ensure privacy of any data stored in the cache or memory, such as by writing zeros across all memory addresses or by filling memory contents with random data.

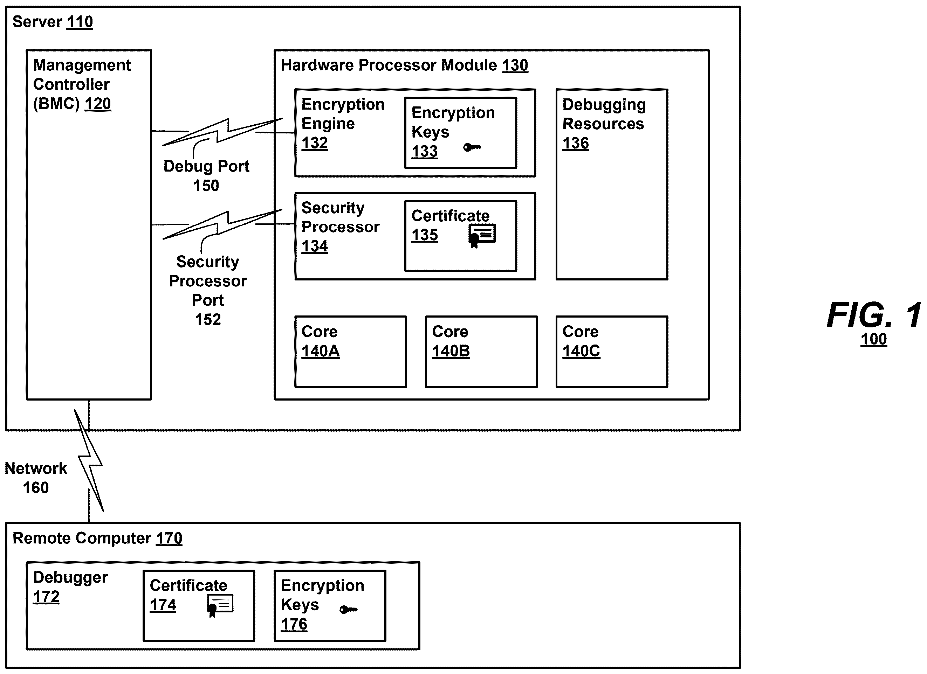

FIG. 1 depicts an example system 100 for remote debugging. System 100 includes a server 110 and a remote computer 170. Server 110 includes a management controller 120 (e.g., a BMC) connected to a hardware processor module 130 via a debug port 150 and a security processor port 152. Remote computer 170 includes a remote debugger 172, which may be implemented, for example, as a software application running on remote computer 170, and a computer network 160 provides a communication channel between the remote computer 170 and the management controller 120 inside the server 110. Hardware processor module 130 may include processing cores 140A-140C executing software (such as an operating system and workloads from the server's clients), a security processor 134, an encryption engine 132, and debugging resources 136. Security processor 134 and remote debugger 172 each include respective certificate data 135, 174 which may be used to mutually authenticate each other, as explained further below. Encryption engine 132 and remote debugger 172 each include respective encryption keys 133, 176, which may be used to encrypt data sent between the remote debugger 172 and hardware processor module 130, as explained further below.

Hardware processor module 130 includes processing cores 140A-140C for running software such as an operating system and/or workloads from the server's clients. While hardware processor module includes three processing cores, embodiments of this disclosure are not so limited, and may include any number of one or more processing cores. Hardware processor module may also include memories or caches (not depicted) associated with processing cores 140A-140C, and these memory registers and/or caches may be accessible via the debugging resources 136. In other embodiments, server 110 may include multiple hardware processor modules with a single management controller. Hardware processor module 130 may have multiple physical external interfaces, including security processor port 152 and debug port 150, for communicating with devices outside of hardware processor module 130.

Security processor 134 may include memory storage for certificate data storage and/or secrets such as a private key that is persistently stored within the security processor and used to verify authenticity of credentials or other certificate data received from outside the hardware processor module 130. Security processor 134 may also act as a gatekeeper between debugging resources 136 and clients of debug port 150, and may prevent access or addressing of debugging resources 136 via debug port 150 without first successfully authenticating credentials received via a secure channel over the debug port 150. In an aspect, security processor 134 may allow a debug port access to select debugging resources, where the selected debugging resources are based on received authenticating credentials, and access to non-selected debugging resources is prevented.

In an aspect, security processor 134 may be configured to change a state of the processor module, such as changing an operational mode between "production" and "debug" modes, and the security processor 134 may be configured to clearing certain caches or memory registers prior to enabling access to some debugging resources.

Debugging resources 136 may include hardware debugging data registers and functionality that is not accessible to software running on processing cores 140A-140C. For example, hardware debugging resources may include a debug network connected to the various functional blocks within hardware processor module (such as the processor cores 140A-140C, data caches (not depicted), or other types of functional block such as a graphics processor, a neural network engine, etc. Debugging resources 136 may include trace data, which may be aggregated from the various functional block via the debug network within the hardware processor module 130. Debugging resources 136 may allow for debug port 150 communication with specific functional blocks within the hardware processor module 130, for example via virtual universal asynchronous receiver (vUART) implemented over the debug network within the hardware processor module 130.

Debug port 150 and security processor port 152 may include a physical wired connections between management controller 120 and hardware processor module 130. Such a wired connection may include serial or parallel data connections. Debug port 150 may, for example, interface with a debug bus within the hardware processor module 130 to enable communication to various debug resources 136, and communication over the physical debug port may follow debugging or maintenance protocols such as MIPI Alliance protocols and/or Joint Test Action Group (JTAG) protocols. In embodiments, security processor 134 may be establish debug port clients over the debug port 150. Security processor port 152 may be a physical wired connection separate from debug port 150, and security processor 152 may enable direct external communication between security processor 134 and external devices such management controller 120.

In an aspect, security processor 134 may establish multiple debug clients of hardware processor module 130. For example, management controller 120 may established as a first debug client of debug port 150 by authenticating credential data provided by the management controller, and a virtual first secured communication channel may be established over the physical debug port 150 wired connection between the management controller and the debugging resources 136. Separately, remote debugger 172 may be authenticated as a second client of debug port 150 by authenticating credential data provided by remote debugger 172, and a virtual second secured communication channel may be established over the physical debug port 150 wired connection between the remote debugger 172 controller and debugging resources 136.

In some embodiments, debug port 150 may include separate physical communications channels for communicating with the security processor and the debug resources. In an aspect, secure communications may be separately established for the security processor 134 and debugging resources 136. For example, a first secure communication channel between the security processor and a debug port client (e.g., management controller 120 or remote debugger 172) may be established over the security processor port 152, and this first secure channel may be used to authenticate that client of the debug port. Once the debug port client is authenticated, security processor 134 may configure encryption engine 132 with encryption keys 133 to establish a second secure communication channel between the debug port client and debugging resources 136 over debug port 150. In other embodiments (not depicted), a debug port and security processor port may be combined into a single physical wired interface, such that communications with the security processor and debugging resources may both occur over such a combined physical wired interface.

Network 160 may include a physical wired and/or wireless network between the management controller 120 and a remote computer 170 with a remote debugger 172. In addition to connecting remote computer 170 and server 110, network 160 may additionally connect remote computer 170 to management controllers in any number of additional servers (not depicted). In an aspect, network 160 may be the same network used by software running on cores 140A-140C to communicate, for example, to the internet. In an aspect, management controller 120 may be configured to authenticate credential data from remote debugger 172 and to establish a secure (e.g. encrypted) communication channel between remote debugger 172 and management controller 120 over network 160. In response to authenticating remote debugger 172 by management controller 120, management controller may enable remote debugger 172 to communicate with security processor 134 via security processor port 152, effectively bridging communications between hardware processor module 130 and a secure communication channel established over network 160 to the authenticated remote debugger 172.

In another aspect, network 160 may be a maintenance or debugging network that is separate from another network (not depicted) that connects server 110 to the internet. In these aspects, network 160 may be a maintenance or debugging network that is not connected to the internet, and further may not be connected to any computers outside the physical facility housing server 110. Accordingly, in some embodiments, remote computer 170 may be remote in that it may be located anywhere in the world attached to the internet; in other embodiments, remote computer may be located with the same building or facility as server 110, but is still remote from server 110 in that remote computer 170 is connected to server 110 only via network 160 and is not otherwise directly attached or physical proximate to server 110.

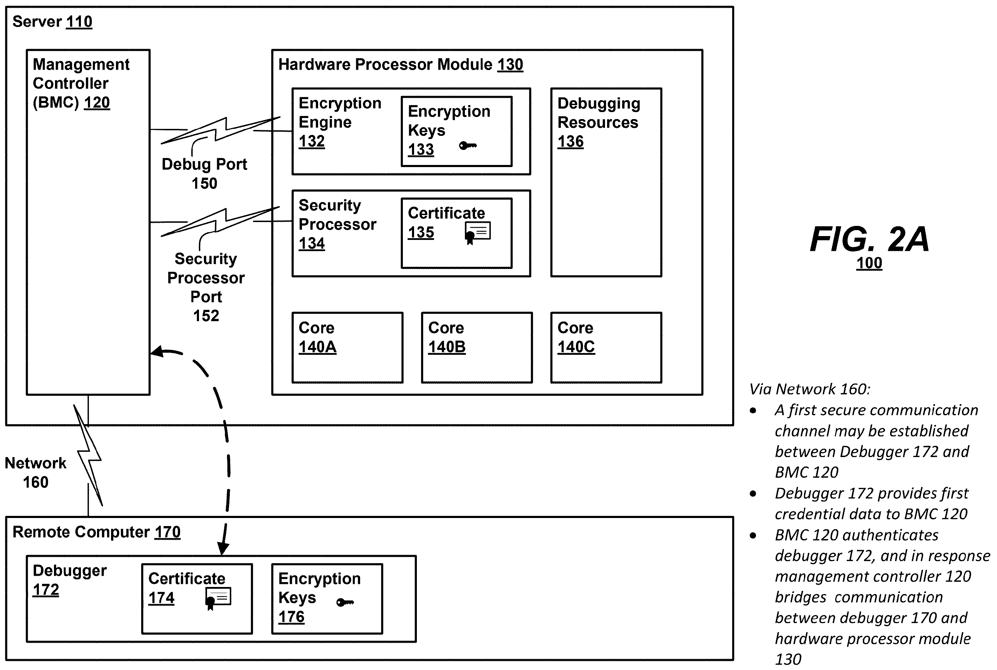

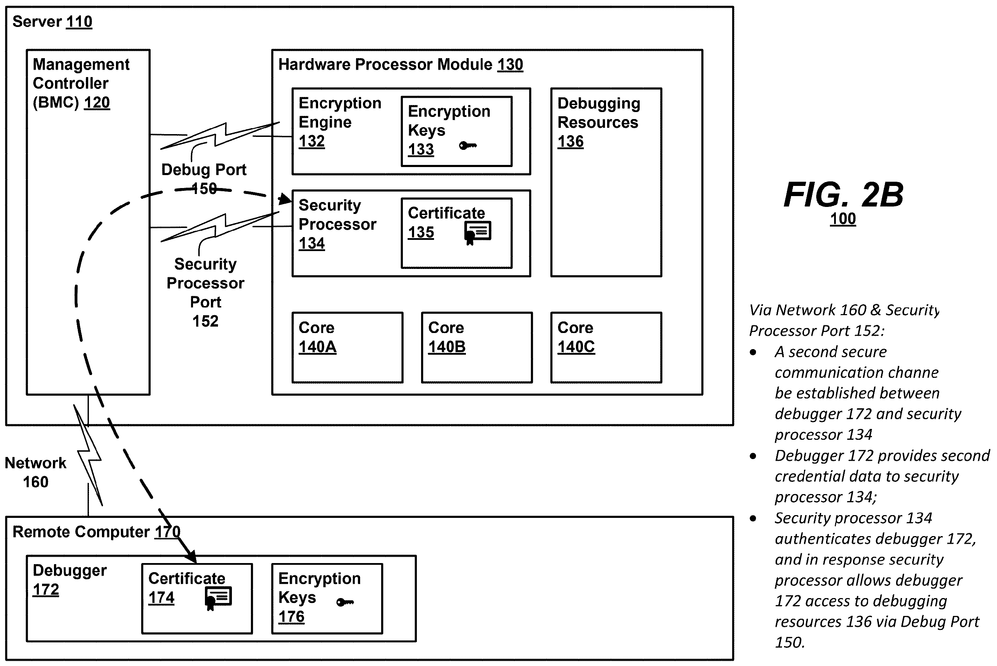

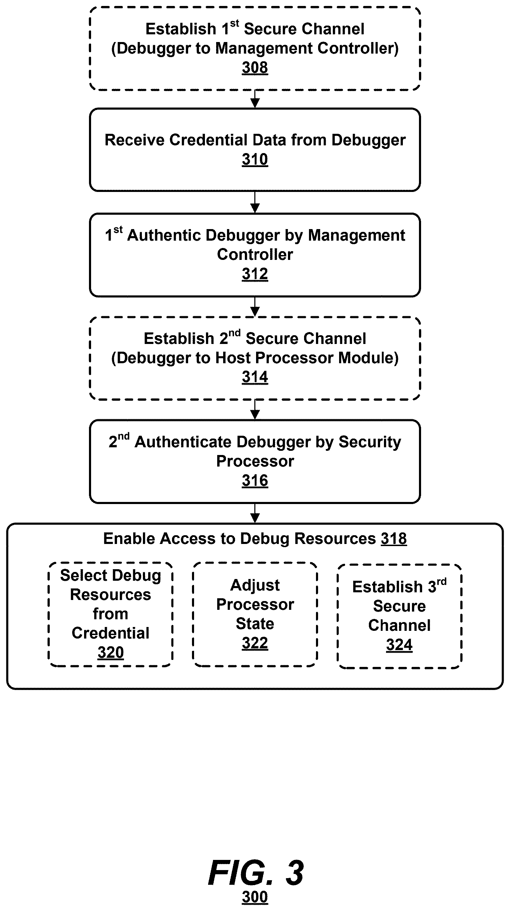

FIGS. 2A-2C illustrate example secure remote debugging techniques using the system of FIG. 1. These example techniques include a two-part authentication of remote debugger 172 before access to debugging resources 136 is permitted. FIG. 2A depicts first authentication by management controller 120, while FIG. 2B depicts second authentication by security processor 134. FIG. 3B depicts establishing an optional encrypted communication channel between debugging resources and remote debugger 172.

In FIG. 2A depicts communication between management controller 120 and remote debugger 172 via network 160. A first secure communication channel may optionally be established between management controller 120 and remote debugger 172 via network 160, for example using Transport Layer Security (TLS) wrapped communication channel over Transmission Control Protocol/Internet Protocol (TCP/IP). Remote debugger 172 may provide first credential data to management controller 120, and the first credential data is then authenticated by the management controller 120. First credential data may be, for example, a digitally signed certificate, and the management controller may authenticate the first credential data using a private key of management controller 120. In response to successfully authenticating the first credential data, management controller enables remote debugger 172 to communicate with security processor 134 by effectively bridging communications between the first secure communications channel and the security processor port 152.

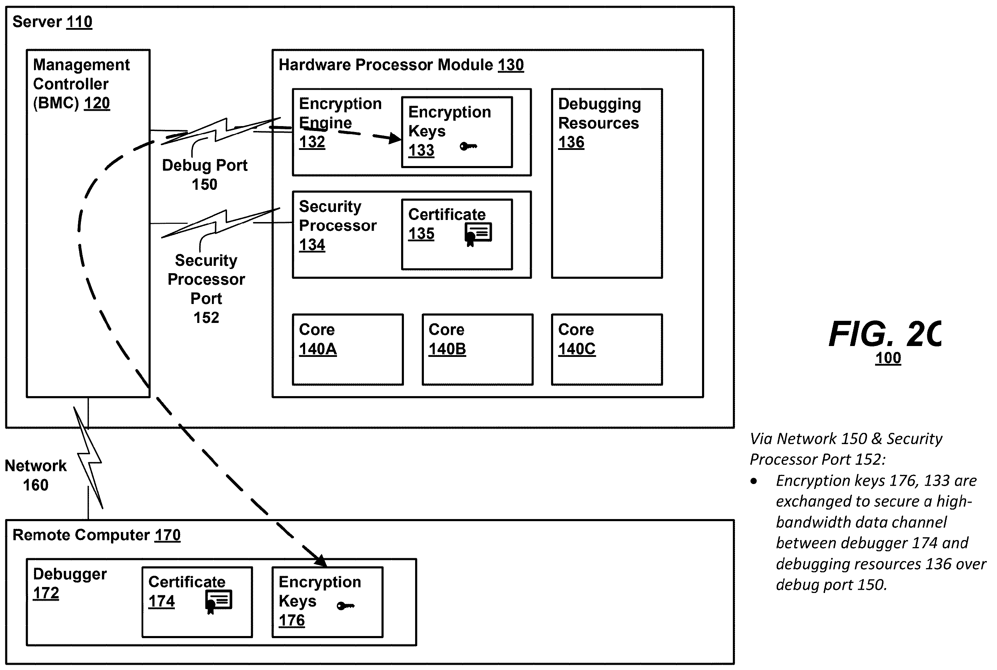

In FIG. 2B depicts communication between security processor 134 and remote debugger 172 via network 160 and security processor port 152. A second secure communication channel may optionally be established between security processor 134 and remote debugger 172, for example using Security Protocol and Data Model (SPDM) from the DMTF group. Remote debugger 172 may provide second credential data to security processor 134, and the second credential data is then authenticated by the security processor 134. Second credential data may be, for example, a digitally signed certificate, and the management controller may authenticate the second credential data using a private key of security processor 134. In response to successfully authenticating the second credential data, security processor 134 enables remote debugger 172 to access debugging resources 136, such as by enabling debug port 150 and establishing a separate security communication channel between debugging resources 136 and remote debugger 172 (as in FIG. 2C).

In FIG. 2C, a third secure communication channel is optionally established between debugging resources and remote debugger 172. Security processor 134 may configure encryption engine 132, for example by facilitating an exchange of encryption keys 133, 176 between debugger 172 and encryption engine 132. In some aspects, the second secure communication channel may include lower-bandwidth encryption performed by security processor 134, while encryption for the third secure communication channel may be performed by dedicated encryption circuit in the encryption engine 132, and accordingly may provide much higher encrypted bandwidth than second communication channel. The higher bandwidth third communication channel may facilitate remote debugger access to, for example, large trace data sets or contents large data caches from within hardware processor module 130. Meanwhile, the lower bandwidth second secure communication channel may, for example, be used for initial authentication, reading and writing contents of single debug registers, and/or control of debug resources.

FIG. 3 depicts an example method 300 for secure remote debugging. Method 300 may be implemented, for example, on server 110 (FIG. 1). Method 300 receiving, at a server, credential data from a remote debugger (box 310). The remote debugger is first authenticated by authenticating the received credential data at a management controller in the server (box 312). In response to the first authentication, the remote debugger is then second authenticated by a security processor in a hardware processor module of the server (box 316). In response to the second authentication, access to debugging resources of the hardware processor module by the remote debugger is enabled by the security processor (box 318).

In some embodiments, the remote debugger may be authenticated by both the management controller and security processor using the same credential data. In other embodiment separate credential data (1^{st} and 2^{nd} credential data) may be used for the separate authentications (1^{st} and 2^{nd} authentications). When separate 1^{st} and 2^{nd} credential data is used, both credential data may be received at the same time (e.g., both 1^{st} and 2^{nd} credential data is received in box 310). In other aspects, only 1^{st} credential data may be received in box 310, while 2^{nd} credential data is received somewhere between boxes 312 and 316.

In some optional aspects of method 300, one or more secure communications channels may be established. A first secure channel may be established over a network between the remote debugger and the server's management controller (box 308) (e.g. via network 160 (FIG. 1)). A second secure channel may be established over the hardware processor module's debug port between the hardware processor module and the remote debugger (box 314). In an aspect, the second secure channel may be established more specifically between the security processor in the hardware processor module and the remote debugger (e.g. via security processor port 152 and network 160 (FIG. 1)). A third secure channel may be established between the hardware processor module and the remote debugger (box 324) using an encryption engine in the hardware processor module (e.g. via debug port 150 and network 160 (FIG. 1)). In some aspects, the third secure channel have higher encryption bandwidth as compared to the second secure channel.

A "secure channel" or "secure communications channel" as used herein may include: 1) encryption of data sent over the channel; and/or 2) authentication of one or both parties at the ends of the channel. The order to secure a channel via encryption and party authentication may vary. In some embodiments, first and second secure channels (as in boxes 308 and 314) may be established as encrypted channels before authenticating a party (as in boxes 312, 316), which may allow transmission of credential data over the encrypted channels. In other embodiments (not depicted), credential data may be transmitted as cleartext (without encryption) and the cleartext credential data may include the encryption keys used to later establish an encrypted communication channel after authentication of the credential data.

Second authentication by the security processor (box 316) may require the security processor to have access to the remote debugger's credential data. Hence, in some aspects, prior to second authentication by the security processor (box 316), the management controller (e.g., management controller 120 (FIG. 1) may send the remote debugger's credential data to the security processor (e.g. security processor 134 (FIG. 1)) in the server's hardware processor module. In some embodiments, in response to the first authentication by the management controller, the management controller may enable communication between the authenticated remote debugger and the hardware processor module by bridging the 1^{st} secure channel (from box 308) to the debug port of the hardware processor module.

The first and second authentication (boxes 312, 316) may be the same or different various embodiments. For example, first authentication by the management controller may be based, for example, on a simple text password. Meanwhile, the second authentication by the security processor may involve a mutual authentication process where both the security processor and remote debugger both authenticate each other by the mutual exchange of digitally signed certificate data (for example using Security Protocol and Data Model (SPDM) from the DMTF group).

Security processor 134 may enable access to debug resources by enabling debug port 150. For example, the physical debug port 150 on the hardware processor module 130 may be disabled until security processor 134 authenticates a debug client. Alternately or in addition, security processor may enable or disable access to individual resources of debug resources 136 based on the identity of a debug client and/or based on specific requests from a debug client. In some embodiments, when enabling access to debugging resources (box 318) a security processor may provide different types of access or different types of debugging resources, and the type of access or type of debugging resources may be selected (box 320) by the security processor based on the debugger's credential data. Different types of access might include read-only access, write-only access, or read-and-write access to debugging register or data caches inside the hardware processor module.

Additionally, the security processor may only allow access to debugging resources after adjusting a state of the hardware processor module (box 322). Many types of processor module state can be adjusted. For example, the hardware processor module may have a "debug" state and a "production" state. The debug state may, for example, change the timing of some processor functions and enable certain debugging resources to be functional, meanwhile the production state may generally be used to run software on the processor cores from a server's clients. Hence, a security processor may change the hardware processor module's state from "production" to "debug" prior to enabling access to certain debugging resources. In another example, in order to ensure privacy of server client data, the security processor may clear one or more memory registers or data caches inside the hardware processor module prior to enabling access to certain debugging resources.

In one aspect, the security processor may enable the remote debugger access to debugging resources by bridging communications between a debug network inside the hardware processor module and the second secure channel (from box 314) and/or third secure channel (from box 324)

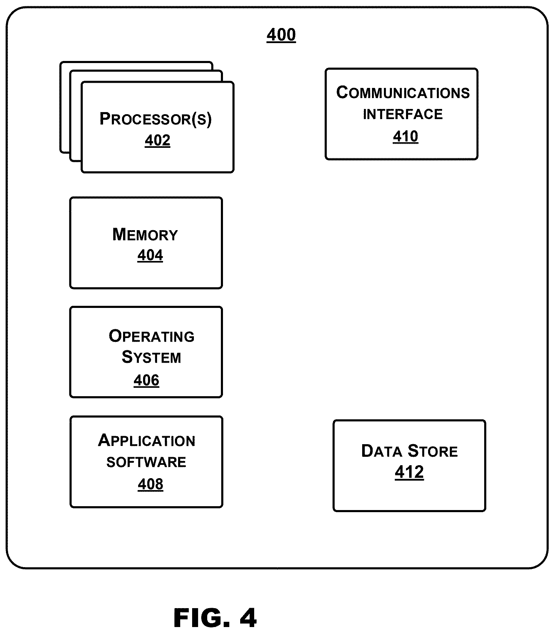

FIG. 4 depicts a block diagram of a computing-based device that may be included in an example of any of the above systems. FIG. 4 illustrates various components of an example computing-based device 400 which are implemented as any form of a computing and/or electronic device. In some examples, computing-based device 400 is a general-purpose computer that is activated or reconfigured by a computer program stored in the computer. In other examples computing-based device 400 is specially constructed for the intended purpose. In some examples, computing device 400 is a microprocessor used in embedded systems applications or other suitable applications. Processor(s) 402 may be employed as examples of (or an example component of) remote computer 170, management controller 120, security processor 134, cores 140A-140C, encryption engine 132, and debugging resources 136 (see FIG. 1) and device 400 may be used to implement some or all of method 300 (FIG. 3).

Computing-based device 400 comprises one or more processors 402 which are microprocessors, controllers, or any other suitable type of processors for processing computer executable instructions to control the operation of the device. The processor(s) 402 may include at least one general-purpose processing device such as a central processing unit, microprocessor, complex instruction set computing (CISC) microprocessor, reduced instruction set computing (RISC) microprocessor, or other general-purpose processing device. In some examples, for example where a system on a chip architecture is used, the processors 402 include one or more special-purpose processing device such as a fixed function block. The special-purpose processing device may be configured to execute instructions for performing the operations and methods described herein. Platform software comprising an operating system 406 or any other suitable platform software is provided at the computing-based device to enable application software 408 to be executed on the device. Data store 412 holds system prompts, context, bot code and other data.

The computer executable instructions are provided using any computer-readable media that is accessible by computing-based device 400. Computer-readable media includes, for example, computer storage media such as memory 404 and communications media. Computer storage media, such as memory 404, includes volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other non-transmission medium that is used to store information for access by a computing device.

In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 404) is shown within the computing-based device 400 it will be appreciated that the storage is, in some examples, distributed or located remotely and accessed via a network or other communication link (e.g., using communication interface 410). The computing-based device is able to communicate with other bots and communications network nodes via communications interface 410.

The disclosure presented herein also encompasses the subject matter set forth in the following clauses:
Clause 1: A method for secure remote debugging of a computing server comprising a management controller and a processor module, the processor module including a debug port and a security processor port, debugging resources, a security processor, and one or more software processing cores, the management controller connected to the debug and security processor ports of the processor module, the method including:
   receiving, via a network interface at the computing server, first credential data and second credential data from a remote debugger;
   first authenticating the first credential data by the management controller;
   in response to the first authenticating, sending the second credential data from the management controller to the security processor via the security processor port;
   second authenticating the second credential data by the security processor;
   in response to the second authenticating, enabling the remote debugger to access the debugging resources via the debug port.
Clause 2: The method of clause 1, wherein the debugging resources include a first hardware debugging resource within the processor module that is accessible via the debug port between the processor module and the management controller and is not accessible to software running on the one or more software processing cores in the processor module.
Clause 3: The method of any of clauses 1-2, wherein the debugging resources include a first resource within the processor module and not within the one or more software processing cores.
Clause 4: The method of any of clauses 1-3, wherein the enabling the remote debugger to access the debugging resources includes enabling the remote debugger to access a subset of available debug registers of the processor module, wherein the subset is based on the second credential data.
Clause 5: The method of any of clauses 1-4, wherein the enabling the remote debugger to access the debugging resources includes clearing data in a memory in the processor module prior to enabling the remote debugger to access a debugging register of the processor module.
Clause 6: The method of any of clauses 1-5, wherein the first credential data and the second credential data is received from the remote debugger via a Transmission Control Protocol/Internet Protocol (TCP/IP) protocol over the network interface.
Clause 7: The method of any of clauses 1-6, wherein by the processor module and the management controller communicate over the debug port via a MIPI Alliance debug protocol.
Clause 8: The method of any of clauses 1-7, further comprising:
   establishing a first secure communications channel between the management controller and the remote debugger; and
   in response to the first authenticating, the management controller bridges communications between the debug port and the first secure communications channel.
Clause 9: The method of any of clauses 8, further comprising:
   in response to the first authenticating,
   establishing a second secure communications channel between the remote debugger and the security processor in the processor module, and
   establishing a third secure communications channel between an encryption processor in the processor module;
   wherein the enabling the remote debugger to access the debugging resources includes enabling the second and third secure communications channels to access the debugging resources.
Clause 10: The method of any of clauses 1-9, wherein the second authenticating includes verifying the authenticity of certificate data received from the remote debugger based on a cryptographic key stored persistently in the security processor of the processor module.
Clause 11: A system for secure remote debugging of a computing server, comprising:
   a management controller;
   a processor module including
   debugging resources,
   a security processor,
   one or more software processing cores
   a security processor port connected to the management controller, and
   a debug port connected to the management controller;
   a network interface;
   wherein:
      the management controller is configured to:
      receive, from a remote debugger via the network interface, first credential data and second credential data,
      first authenticate the first credential data, and
      in response to the first authenticating, send the second credential data to the processor module via the security processor port; and
      the security processor is configured to:
         second authenticate the second credential data, and
         in response to the second authenticating, enable the remote debugger to access the debugging resources via the debug port.
Clause 12: The system of clause 11, wherein the debugging resources include a first hardware debugging resource within the processor module that is accessible via the debug port between the processor module and the management controller and is not accessible to software running on the one or more software processing cores in the processor module.
Clause 13: The system of any of clauses 11-12, wherein the debugging resources include a first resource within the processor module and not within the one or more software processing cores.
Clause 14: The system of any of clauses 11-13, wherein the enabling the remote debugger to access the debugging resources includes enabling the remote debugger to access a subset of available debug registers of the processor module, wherein the subset is based on the second credential data.
Clause 15: The system of any of clauses 11-14, wherein the enabling the remote debugger to access the debugging resources includes clearing data in a memory in the processor module prior to enabling the remote debugger to access a debugging register of the processor module.
Clause 16: The system of any of clauses 11-15, wherein the first credential data and the second credential data is received from the remote debugger via a Transmission Control Protocol/Internet Protocol (TCP/IP) protocol over the network interface.
Clause 17: The system of any of clauses 11-16, wherein by the processor module and the management controller communicate over the debug port via a MIPI Alliance debug protocol.
Clause 18: The system of any of clauses 11-17, further comprising:
   establishing a first secure communications channel between the management controller and the remote debugger; and
   in response to the first authenticating, the management controller bridges communications between the debug port and the first secure communications channel.
Clause 19: The system of any of clauses 11-18, further comprising:
   in response to the first authenticating,
   establishing a second secure communications channel between the remote debugger and the security processor in the processor module, and
   establishing a third secure communications channel between an encryption processor in the processor module;
   wherein the enabling the remote debugger to access the debugging resources includes enabling the second and third secure communications channels to access the debugging resources.
Clause 20: A non-transitory computer-readable storage medium storing instructions that, when executed on one or more processors of a computing server comprising a management controller and a processor module, the processor module including a debug port and a security processor port, debugging resources, a security processor, and one or more software processing cores, the management controller connected to the debug and security processor ports of the processor module, the instructions cause the computing server to:
   receive, via a network interface at the computing server, first credential data and second credential data from a remote debugger;
   first authenticate the first credential data by the management controller;
   in response to the first authenticating, send the second credential data from the management controller to the security processor via the security processor port;
   second authenticate the second credential data by the security processor;
   in response to the second authenticating, enable the remote debugger to access the debugging resources via the debug port.

In the above detailed description, reference is made to the accompanied drawings, which form a part hereof, and which is shown by way of illustration, specific example configurations of which the concepts can be practiced. These configurations are described in sufficient detail to enable those skilled in the art to practice the techniques disclosed herein, and it is to be understood that other configurations can be utilized, and other changes may be made, without departing from the spirit or scope of the presented concepts. The above detailed description is, therefore, not to be taken in a limiting sense, and the scope of the presented concepts is defined only by the appended claims.

The above description provides specific details for a thorough understanding of, and enabling description for, various examples of the technology. One skilled in the art will understand that the technology may be practiced without many of these details. In some instances, well-known structures and functions have not been shown or described in detail to avoid unnecessarily obscuring the description of examples of the technology. It is intended that the terminology used in this disclosure be interpreted in its broadest reasonable manner, even though it is being used in conjunction with a detailed description of certain examples of the technology. Although certain terms may be emphasized below, any terminology intended to be interpreted in any restricted manner will be overtly and specifically defined as such in this Detailed Description section. Throughout the specification and claims, the following terms take at least the meanings explicitly associated herein, unless the context dictates otherwise. The meanings identified below do not necessarily limit the terms, but merely provide illustrative examples for the terms. For example, each of the terms "based on" and "based upon" is not exclusive, and is equivalent to the term "based, at least in part, on," and includes the option of being based on additional factors, some of which may not be described herein. As another example, the term "via" is not exclusive, and is equivalent to the term "via, at least in part," and includes the option of being via additional factors, some of which may not be described herein. The phrase "in one example," as used herein does not necessarily refer to the same embodiment or example, although it may. Use of particular textual numeric designators does not imply the existence of lesser-valued numerical designators. References in the singular are made merely for clarity of reading and include plural references unless plural references are specifically excluded. The term "or" is an inclusive "or" operator unless specifically indicated otherwise. For example, the phrase "A or B" means "A, B, or A and B." As used herein, the terms "component" and "system" are intended to encompass hardware, software, or various combinations of hardware and software. Thus, for example, a system or component may be a process, a process executing on a computing device, the computing device, or a portion thereof. The meaning of "a," "an," and "the" includes plural reference, and the meaning of "in" includes "in" and "on." The term "connected" means a direct electrical connection between the items connected, without any intermediate devices. The term "coupled" means a direct electrical connection between the items connected, or an indirect connection through one or more passive or active intermediary devices and/or components. The term "signal" means at least a power, current, voltage, data, electric wave, magnetic wave, electromagnetic wave, or optical signal. Based upon context, the term "coupled" may refer to a wave or field coupling effect, which may relate to a corresponding optical field, magnetic field, electrical field, or a combined electromagnetic field.

It will be understood that the configurations and/or approaches described herein are examples, and that these specific embodiments or examples are not to be considered in a limiting sense, because numerous variations are possible. As such, various systems, circuits, and/or devices may be broken into additional functions or circuits, and/or combined with other functions or circuits as may be desirable in a specific implementation. Similarly, the specific routines, procedures or methods described herein may represent one or more of any number of processing strategies. As such, various acts illustrated and/or described may be performed in the sequence illustrated and/or described, in other sequences, in parallel, or omitted. Likewise, the order of the above-described processes or methods may be changed. The subject matter thus includes all novel and non-obvious combinations and sub-combinations of the methods, processes, circuits, devices, systems and configurations, and other features, functions and/or properties disclosed herein, as well as any and all equivalents thereof.

In closing, although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method for secure remote debugging of a computing server (110) comprising a management controller (120) and a processor module (130), the processor module (130) including a debug port (150) and a security processor port (152), debugging resources (136), a security processor (134), and one or more software processing cores, the management controller (120) connected to the debug and security processor ports of the processor module (130), the method including:
receiving, via a network interface (160) at the computing server, first credential data and second credential data from a remote debugger;
first authenticating the first credential data by the management controller (120);
in response to the first authenticating, sending the second credential data from the management controller (120) to the security processor (134) via the security processor port (152);
second authenticating the second credential data by the security processor (134);
in response to the second authenticating, enabling the remote debugger to access the debugging resources (136) via the debug port (150).

2. The method of claim 1, wherein the debugging resources include a first hardware debugging resource within the processor module that is accessible via the debug port between the processor module and the management controller and is not accessible to software running on the one or more software processing cores in the processor module.

3. The method of claim 1 or claim 2, wherein the debugging resources include a first resource within the processor module and not within the one or more software processing cores.

4. The method of any preceding claim, wherein the enabling the remote debugger to access the debugging resources includes enabling the remote debugger to access a subset of available debug registers of the processor module, wherein the subset is based on the second credential data.

5. The method of any preceding claim, wherein the enabling the remote debugger to access the debugging resources includes clearing data in a memory in the processor module prior to enabling the remote debugger to access a debugging register of the processor module.

6. The method of any preceding claim, wherein the first credential data and the second credential data is received from the remote debugger via a Transmission Control Protocol/Internet Protocol, TCP/IP, protocol over the network interface.

7. The method of any preceding claim, wherein by the processor module and the management controller communicate over the debug port via a MIPI Alliance debug protocol.

8. The method of any preceding claim, further comprising:
establishing a first secure communications channel between the management controller and the remote debugger; and
in response to the first authenticating, the management controller bridges communications between the debug port and the first secure communications channel.

9. The method of any preceding claim, further comprising:
in response to the first authenticating,
establishing a second secure communications channel between the remote debugger and the security processor in the processor module, and
establishing a third secure communications channel between an encryption processor in the processor module;
wherein the enabling the remote debugger to access the debugging resources includes enabling the second and third secure communications channels to access the debugging resources.

10. The method of any preceding claim, wherein the second authenticating includes verifying the authenticity of certificate data received from the remote debugger based on a cryptographic key stored persistently in the security processor of the processor module.

11. A system for secure remote debugging of a computing server (110), comprising:
a management controller (120);
a processor module (130) including
debugging resources,
a security processor (134),
one or more software processing cores
a security processor port (152) connected to the management controller, and
a debug port (150) connected to the management controller;
a network interface (160);
wherein:
the management controller is configured to:
receive, from a remote debugger via the network interface, first credential data and second credential data,
first authenticate the first credential data, and
in response to the first authenticating, send the second credential data to the processor module via the security processor port; and
the security processor is configured to:
second authenticate the second credential data, and
in response to the second authenticating, enable the remote debugger to access the debugging resources via the debug port.

12. The system of claim 11, wherein the debugging resources include a first hardware debugging resource within the processor module that is accessible via the debug port between the processor module and the management controller and is not accessible to software running on the one or more software processing cores in the processor module.

13. The system of claim 11 or claim 12, wherein the debugging resources include a first resource within the processor module and not within the one or more software processing cores.

14. The system of any of claims 11-13, wherein the enabling the remote debugger to access the debugging resources includes enabling the remote debugger to access a subset of available debug registers of the processor module, wherein the subset is based on the second credential data.

15. A non-transitory computer-readable storage medium storing instructions that, when executed on one or more processors of a computing server **(110** comprising a management controller (120) and a processor module (130), the processor module including a debug port (150) and a security processor port (152), debugging resources (136), a security processor (134), and one or more software processing cores, the management controller (120) connected to the debug and security processor ports of the processor module, the instructions cause the computing server to:
receive, via a network interface (160) at the computing server, first credential data and second credential data from a remote debugger;
first authenticate the first credential data by the management controller;
in response to the first authenticating, send the second credential data from the management controller to the security processor via the security processor port;
second authenticate the second credential data by the security processor;
in response to the second authenticating, enable the remote debugger to access the debugging resources via the debug port.
